# FASCICULE DE BREVET EUROPEEN

(11) **EP 3 572 215 B1**
(45) Date de publication et mention de la délivrance du brevet: **12.08.2020**
(21) Numéro de dépôt: 19169389.4
(22) Date de dépôt: 16.04.2019
(51) Int. Cl.: B29C 65/36

(54) **PROCEDE D'ASSEMBLAGE PAR SOUDAGE D'AU MOINS DEUX PIECES EN MATERIAU COMPOSITE**
ZUSAMMENBAUVERFAHREN DURCH VERSCHWEISSEN VON MINDESTENS ZWEI TEILEN AUS VERBUNDMATERIAL
ASSEMBLY METHOD BY WELDING AT LEAST TWO PARTS MADE OF COMPOSITE MATERIAL

(30) Priorité: 24.05.2018 FR 1854396
(43) Date de publication de la demande: 27.11.2019
(73) Titulaire: Airbus Operations S.A.S., 31060 Toulouse (FR)
(72) Inventeur: MURILLO, Richard, 31060 Toulouse Cedex 9 (FR); MEYER, Amaury, 31060 Toulouse Cedex 9 (FR)
(74) Mandataire: Gicquel, Olivier Yves Gérard

(56) Documents cités:
- US-A1- 2003 062 118
- US-A1- 2011 284 691

## Description

La présente demande se rapporte à un procédé d'assemblage par soudage d'au moins deux pièces en matériau composite ainsi qu'à un assemblage de pièces en matériau composite ainsi obtenu.

Une pièce en matériau composite comprend des fibres de renfort noyées dans une matrice. Selon une configuration, une pièce en matériau composite comprend plusieurs plis de fibres de carbone superposés et noyés dans une résine thermoplastique.

Pour chacun des plis, les fibres sont unidirectionnelles et orientées selon une direction.

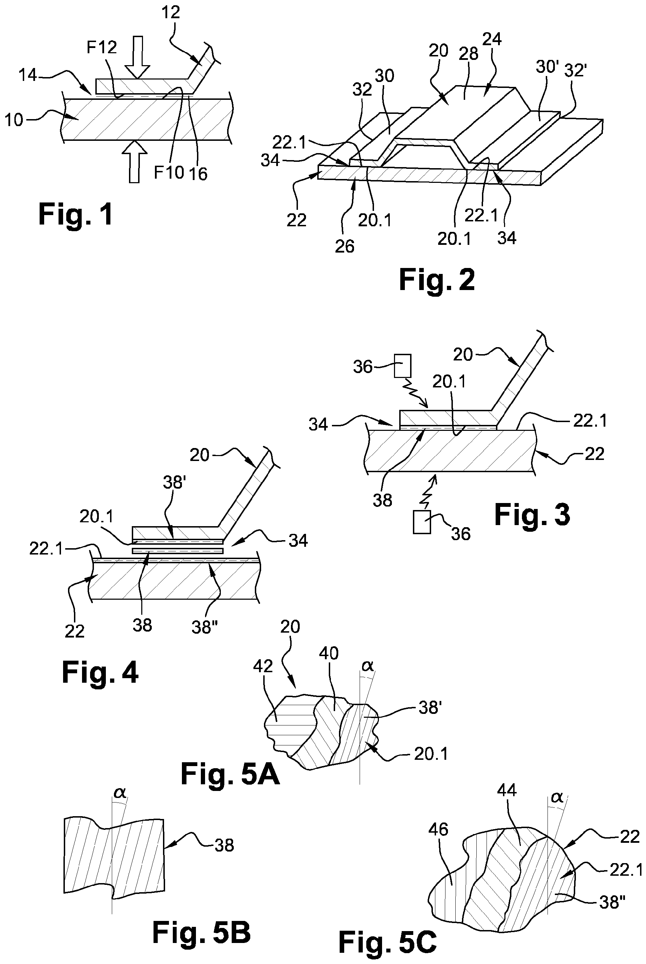

Selon un mode de réalisation visible sur la figure 1, un assemblage de deux pièces 10, 12 en matériau composite comprend au moins une interface 14 présentant une première surface de contact F10 de la première pièce 10 reliée à une deuxième surface de contact F12 de la deuxième pièce 12.

Selon un mode opératoire, un champ électromagnétique, créé dans l'environnement de l'interface 14, produit un courant électrique induit qui engendre un échauffement. Ce dernier provoque une soudure reliant les première et deuxième surfaces de contact F10, F12 des deux pièces.

Pour éviter d'endommager les plis des pièces 10 et 12 avoisinant l'interface 14 et ne pas générer de contraintes internes importantes dans les pièces 10 et 12, il est nécessaire de concentrer l'échauffement au niveau de l'interface 14.

Selon un premier mode opératoire visible sur la figure 1, une couche 16, également appelée suscepteur, présentant une conductivité supérieure à celle des fibres de carbone, est interposée entre les première et deuxième surfaces de contact F10, F12. A titre d'exemple, la couche 16 est une grille en cuivre.

Ce premier mode opératoire n'est pas pleinement satisfaisant car la présence de la couche 16 tend à réduire les caractéristiques mécaniques de la liaison entre les pièces 10 et 12 en matériau composite. Par ailleurs, la couche 16 conduit à augmenter la masse embarquée alors qu'elle n'a aucune fonctionnalité post-assemblage, hormis la concentration de l'échauffement lors de l'assemblage.

Selon un deuxième mode opératoire, les surfaces extérieures des pièces 10 et 12 sont refroidies afin d'éviter un échauffement excessif en dehors d'une zone de l'assemblage centrée par rapport aux surfaces extérieures. Toutefois, en fonction des épaisseurs des pièces 10 et 12, l'interface 14 peut être décalée par rapport à cette zone centrée par rapport aux surfaces extérieures, comme illustré sur la figure 1. Par conséquent, ce deuxième mode opératoire impose des contraintes dimensionnelle et géométrique importantes sur les pièces 10 et 12.

La demande de brevet US2003062118 décrit les caractéristiques indiquées dans le préambule de la revendication 1

La présente invention vise à remédier aux inconvénients de l'art antérieur.

A cet effet, l'invention a pour objet un procédé d'assemblage tel que revendiqué dans la revendication 1. Ce procédé permet d'obtenir une concentration de l'échauffement au niveau de l'interface, même si l'interface n'est pas positionnée centrée par rapport aux surfaces extérieures de l'assemblage, sans avoir besoin d'intercaler entre les pièces une couche dédiée exclusivement à la concentration de l'échauffement. Selon un autre avantage, le (ou les) pli(s) de jonction contribue(nt) aux caractéristiques mécaniques de l'assemblage et ont une fonctionnalité post-assemblage.

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
- La figure 1 est une coupe d'un assemblage de deux pièces en matériau composite qui illustre un mode de réalisation de l'art antérieur,
- La figure 2 est une vue en perspective d'un exemple d'assemblage de deux pièces en matériau composite,
- La figure 3 est une coupe d'un assemblage de deux pièces en matériau composite qui illustre un premier mode de réalisation de l'invention,
- La figure 4 est une coupe d'un assemblage de deux pièces en matériau composite qui illustre un deuxième mode de réalisation de l'invention, avant l'assemblage,
- La figure 5A est une vue avec des arrachements partiels d'une première surface de contact d'une première pièce de l'assemblage visible sur la figure 4,
- La figure 5B est une vue d'un pli de jonction de l'assemblage visible sur la figure 4, et
- La figure 5C est une vue avec des arrachements partiels d'une deuxième surface de contact d'une deuxième pièce de l'assemblage visible sur la figure 4.

Sur les figures 2 à 4, on a représenté un assemblage de deux pièces 20 et 22 en matériau composite.

A titre d'exemple, comme illustré sur la figure 2, la pièce 20 est un renfort 24 avec une section transversale en oméga et la pièce 22 est un panneau 26.

Le renfort 24 présente une partie centrale 28 et des première et deuxième ailes 30, 30', disposées de part et d'autre de la partie centrale 28, reliées au panneau 26. Le renfort 24 est délimité par des bords latéraux 32, 32'.

Bien entendu, l'invention n'est pas limitée à ce type d'assemblage.

Quel que soit le mode de réalisation, l'assemblage comprend une première pièce 20 comportant au moins une première surface de contact 20.1, une deuxième pièce 22 comportant au moins une deuxième surface de contact 22.1 et au moins une interface 34 au niveau de laquelle les première et deuxième surfaces de contact 20.1, 22.1 sont reliées, comme illustré sur les figures 3 et 4.

Chaque pièce 20, 22 en matériau composite comprend plusieurs plis de fibres de renfort superposés et noyés dans une matrice.

Selon un mode de réalisation, les fibres de renfort sont des fibres de carbone noyées dans une résine thermoplastique.

Pour chacun des plis, les fibres sont unidirectionnelles et orientées selon une direction formant un angle donné avec une direction de référence.

Pour chacune des première et deuxième pièces 20, 22, le nombre de plis et l'orientation de leurs fibres sont déterminés en fonction des caractéristiques mécaniques souhaitées pour les première et deuxième pièces 20, 22.

La première pièce 20 comprend des plis superposés, avec chacun des fibres unidirectionnelles, les différents plis de la première pièce 20 présentant des fibres orientées selon un premier jeu de directions. La deuxième pièce 22 comprend des plis superposés, avec chacun des fibres unidirectionnelles, les différents plis de la deuxième pièce 22 présentant des fibres orientées selon un deuxième jeu de directions.

Chaque jeu comprend plusieurs directions, les fibres formant pour chacune des directions un angle donné avec la direction de référence. Le premier jeu de la première pièce 20 peut comprendre des directions différentes de celles du deuxième jeu de la deuxième pièce 22.

Pour chaque jeu, les fibres des première et deuxième pièces 20, 22 forment avec la direction de référence un angle de l'ordre de 0°, 45°, 90° ou 135°.

Les première et deuxième surfaces de contact 20.1, 22.1 sont reliées par une soudure en générant un échauffement grâce à un courant électrique induit.

A cet effet, le procédé d'assemblage comprend une étape de génération d'un courant électrique induit au niveau de l'interface 34 grâce à un générateur de champ électromagnétique 36.

Selon une caractéristique de l'invention, l'interface 34 comprend au moins un pli de jonction 38 de fibres conductrices intercalé entre la première surface de contact 20.1 de la première pièce 20 et la deuxième surface de contact 22.1 de la deuxième pièce 22 et/ou positionné au niveau d'au moins une surface de contact parmi les première et deuxième surfaces de contact 20.1, 22.1.

Par fibre conductrice, on entend que les fibres du pli de jonction 38 ont la capacité à véhiculer un courant électrique et donc à générer un échauffement par effet joule.

Lorsque l'interface 34 comprend plusieurs plis de jonction 38, ces différents plis de jonction 38 présentent des fibres orientées toutes selon la même direction. Les fibres de chaque pli de jonction 38 sont dans un même matériau que les fibres des plis des première et deuxième pièces 20, 22.

Chaque pli de jonction 38 comprend des fibres unidirectionnelles orientées selon une direction différente des directions des fibres d'au moins les plis de fibres des première et deuxième pièces 20, 22 proches des première et deuxième surfaces de contact 20.1 et 22.1. Par proche, on entend les dix premières couches des première et deuxième pièces 20, 22 à partir des première et deuxième surfaces de contact 20.1, 22.1.

Selon une configuration, les fibres de chaque pli de jonction 38 sont orientées selon une direction différente de toutes les directions des fibres des plis de fibres des première et deuxième pièces 20, 22. A titres d'exemple, les fibres de chaque pli de jonction 38 forment un angle de l'ordre de 22,5°, 67,5°, 112,5° ou 157,5° avec la direction de référence.

Le générateur de champ électromagnétique 36 est configuré pour générer un courant électrique induit selon une direction approximativement parallèle à la direction des fibres de chaque pli de jonction 38.

Par conséquent, compte tenu de l'orientation des fibres du (ou des) pli(s) de jonction 38 et de l'orientation du courant induit produit par le générateur de champ électromagnétique 36, l'échauffement généré par le courant induit va être essentiellement produit au niveau du (ou des) pli(s) de jonction 38. Cet agencement permet d'obtenir une concentration de l'échauffement au niveau de l'interface 34. Selon un autre avantage, ce (ou ces) pli(s) de jonction 38 contribue(nt) aux propriétés structurelles de l'assemblage.

Selon une autre caractéristique, les fibres d'au moins un des plis de jonction 38 sont imprégnées d'une résine.

En complément, lors de la soudure, les première et deuxième pièces 20 et 22 sont soumises à des efforts de compression visant à plaquer les première et deuxième surfaces de contact 20.1, 20.2.

Ainsi, lors de la soudure, l'échauffement va ramollir ou déconsolider la résine qui va fluer grâce aux efforts de compression et remplir les éventuels interstices présents entre les première et deuxième pièces 20, 22. Cet agencement contribue à réduire la porosité de l'assemblage.

Selon un mode de réalisation, les fibres du ou des pli(s) de jonction sont dans le même matériau que les fibres des première et deuxième pièces 20 et 22. Selon un mode de réalisation, les fibres du ou des pli(s) de jonction sont en carbone. Ainsi, contrairement à l'art antérieur, le (ou les) pli(s) de jonction 38 contribue(nt) aux caractéristiques mécaniques de l'assemblage et ont une fonctionnalité post-assemblage.

Lorsque les fibres du (ou des) pli(s) de jonction 38 sont imprégnées de résine, elles le sont avec une résine thermoplastique de même nature que celle d'au moins une des première et deuxième pièces 20, 22.

Selon un premier mode de réalisation visible sur la figure 3, l'interface 34 comprend un unique pli de jonction 38 intercalé entre les première et deuxième surfaces de contact 20.1, 22.1 des première et deuxième pièces 20 et 22.

Selon un autre mode de réalisation visible sur la figure 4, 5A à 5C, l'interface 34 comprend un premier pli de jonction 38 intercalé entre les première et deuxième surfaces de contact 20.1, 22.1 des première et deuxième pièces 20 et 22 (visible sur la figure 5B), un deuxième pli de jonction 38' positionné au niveau de la première surface de contact 20.1 de la première pièce 20 et un troisième pli de jonction 38" positionné au niveau de la deuxième surface de contact 22.1 de la deuxième pièce 22. Les fibres des différents plis de jonction 38, 38, 38' forment toutes un angle α avec la direction longitudinale.

Sur la figure 5A, on a représenté les trois premiers plis de la première pièce 20 à partir de la première surface de contact 20.1, à savoir le deuxième pli de jonction 38', un premier pli 40 présentant des fibres orientées selon une première direction différente de celle des fibres du deuxième pli de jonction 38' et un deuxième pli 42 présentant des fibres orientées selon une deuxième direction différente de celle des fibres du deuxième pli de jonction 38'.

Sur la figure 5C, on a représenté les trois premiers plis de la deuxième pièce 22 à partir de la deuxième surface de contact 22.1, à savoir le troisième pli de jonction 38", un troisième pli 44 présentant des fibres orientées selon une troisième direction différente de celle des fibres du troisième pli de jonction 38" et un quatrième pli 46 présentant des fibres orientées selon une quatrième direction différente de celle des fibres du troisième pli de jonction 38".

Selon un autre mode de réalisation, l'interface 34 comprend un premier pli de jonction 38 intercalé entre les première et deuxième surfaces de contact 20.1, 22.1 des première et deuxième pièces 20 et 22 ainsi qu'un deuxième pli de jonction 38' ou 38" positionné au niveau seulement de l'une des deux surfaces de contact 20.1, 22.2.

Selon un autre mode de réalisation, l'interface 34 ne comprend pas de pli de jonction 38 intercalé entre les première et deuxième surfaces de contact 20.1, 22.2 des première et deuxième pièces 20, 22. L'interface 34 comprend un pli de jonction 38' positionné au niveau de la première surface de contact 20.1 de la première pièce 20 et/ou un pli de jonction 38" positionné au niveau de la deuxième surface de contact 22.1 de la deuxième pièce 22.

Selon un premier mode opératoire, au moins un pli de jonction 38, 38', 38" est positionné juste avant l'étape de génération du courant électrique induit.

Selon une autre mode opératoire, au moins un pli de jonction 38', 38" positionné au niveau d'une surface de contact 20.1 ou 22.2 est intégré à la pièce 20, 22 avant une étape de consolidation de ladite pièce 20, 22.

## Revendications

1. Procédé d'assemblage par soudage d'au moins deux pièces (20, 22) en matériau composite, l'assemblage comprenant une première pièce (20) comportant au moins une première surface de contact (20.1), une deuxième pièce (22) comportant au moins une deuxième surface de contact (22.1) et au moins une interface (34) au niveau de laquelle les première et deuxième surfaces de contact (20.1, 22.1) sont reliées, chaque pièce (20, 22) en matériau composite comportant plusieurs plis de fibres superposés et noyés dans une matrice, le procédé comprenant une étape de génération d'un courant électrique induit et une étape de positionnement d'au moins un pli de jonction (38) de fibres conductrices intercalé entre la première surface de contact (20.1) de la première pièce (20) et la deuxième surface de contact (22.1) de la deuxième pièce (22) et/ou positionné au niveau d'au moins une surface de contact parmi les première et deuxième surfaces de contact (20.1, 22.1), chaque pli de jonction (38) présentant des fibres unidirectionnelles, orientées selon une direction différente des directions des fibres d'au moins les plis de fibres des première et deuxième pièces (20, 22) proches des première et deuxième surfaces de contact (20.1, 22.1), **caractérisé en ce que** le courant électrique induit est généré selon une direction approximativement parallèle à la direction des fibres de chaque pli de jonction (38).

2. Procédé d'assemblage par soudage d'au moins deux pièces (20, 22) en matériau composite selon la revendication 1, **caractérisé en ce que** les fibres de chaque pli de jonction (38) sont orientées selon une direction différente de toutes les directions des fibres des plis de fibres des première et deuxième pièces (20, 22).

3. Procédé d'assemblage par soudage d'au moins deux pièces (20, 22) en matériau composite selon l'une des revendications précédentes, **caractérisé en ce que** les fibres d'au moins un des plis de jonction (38) sont imprégnées d'une résine.

4. Procédé d'assemblage par soudage d'au moins deux pièces (20, 22) en matériau composite selon l'une des revendications précédentes, **caractérisé en ce que** les fibres des première et deuxième pièces (10, 12) forment avec une direction de référence un angle de l'ordre de 0°, 45°, 90° ou 135° et **en ce que** les fibres de chaque pli de jonction (38) forment un angle avec la direction de référence de l'ordre de 22,5°, 67,5°, 112,5° ou 157,5°.

5. Procédé d'assemblage par soudage d'au moins deux pièces (20, 22) en matériau composite selon l'une des revendications 1 à 4, **caractérisé en ce qu'**un unique pli de jonction (38) est intercalé entre les première et deuxième surfaces de contact (20.1, 22.1) des première et deuxième pièces (20, 22).

6. Procédé d'assemblage par soudage d'au moins deux pièces (20, 22) en matériau composite selon l'une des revendications 1 à 4, **caractérisé en ce qu'**un premier pli de jonction (38) est intercalé entre les première et deuxième surfaces de contact (20.1, 22.1) des première et deuxième pièces (20, 22) et **en ce qu'**un deuxième pli de jonction (38') et/ou un troisième pli de jonction (38") est/sont positionné(s) au niveau de la première surface de contact (20.1) de la première pièce (20) et/ou de la deuxième surface de contact (22.1) de la deuxième pièce (22).

7. Procédé d'assemblage par soudage d'au moins deux pièces (20, 22) en matériau composite selon l'une des revendications 1 à 4, **caractérisé en ce qu'**un pli de jonction (38', 38") est positionné au niveau de la première surface de contact (20.1) de la première pièce (20) et/ou au niveau de la deuxième surface de contact (22.1) de la deuxième pièce (22).

8. Procédé d'assemblage par soudage d'au moins deux pièces (20, 22) en matériau composite selon l'une des revendications précédentes, **caractérisé en ce qu'**au moins un pli de jonction (38, 38', 38") est positionné juste avant l'étape de génération du courant électrique induit.

9. Procédé d'assemblage par soudage d'au moins deux pièces (20, 22) en matériau composite selon l'une des revendications précédentes, **caractérisé en ce qu'**au moins un pli de jonction (38', 38") positionné au niveau d'une surface de contact (20.1 ou 22.2) est intégré à la pièce (20, 22) avant une étape de consolidation de ladite pièce (20, 22).

## Patentansprüche

1. Zusammenbauverfahren durch Verschweißen von mindestens zwei Teilen (20, 22) aus Verbundmaterial, wobei der Zusammenbau ein erstes Teil (20), das mindestens eine erste Kontaktfläche (20.1) umfasst, ein zweites Teil (22), das mindestens eine zweite Kontaktfläche (22.1) umfasst, und mindestens eine Schnittstelle (34), in deren Bereich die erste und zweite Kontaktfläche (20.1, 22.1) miteinander verbunden sind, beinhaltet, wobei jedes Teil (20, 22) aus Verbundmaterial mehrere Faserlagen umfasst, die übereinander geschichtet und in einer Matrix eingebettet sind, wobei das Verfahren einen Schritt des Erzeugens eines induzierten elektrischen Stroms und einen Schritt des Positionierens mindestens einer Verbindungslage (38) von leitenden Fasern, die zwischen der ersten Kontaktfläche (20.1) des ersten Teils (20) und der zweiten Kontaktfläche (22.1) des zweiten Teils (22) eingefügt wird und/oder im Bereich mindestens einer Kontaktfläche von der ersten und zweiten Kontaktfläche (20.1, 22.1) positioniert wird, beinhaltet, wobei jede Verbindungslage (38) unidirektionale Fasern aufweist, die gemäß einer Richtung, die sich von den Richtungen der Fasern mindestens der Faserlagen des ersten und zweiten Teils (20, 22) in der Nähe der ersten und zweiten Kontaktfläche (20.1, 22.1) unterscheidet, ausgerichtet sind, **dadurch gekennzeichnet, dass** der induzierte elektrische Strom gemäß einer Richtung, die zu der Richtung der Fasern jeder Verbindungslage (38) ungefähr parallel ist, erzeugt wird.

2. Zusammenbauverfahren durch Verschweißen von mindestens zwei Teilen (20, 22) aus Verbundmaterial nach Anspruch 1, **dadurch gekennzeichnet, dass** die Fasern jeder Verbindungslage (38) gemäß einer Richtung ausgerichtet sind, die sich von allen Richtungen der Fasern der Faserlagen des ersten und zweiten Teils (20, 22) unterscheidet.

3. Zusammenbauverfahren durch Verschweißen von mindestens zwei Teilen (20, 22) aus Verbundmaterial nach einem der vorhergehenden Ansprüche, **dadurch gekennzeichnet, dass** die Fasern mindestens einer der Verbindungslagen (38) mit einem Harz imprägniert sind.

4. Zusammenbauverfahren durch Verschweißen von mindestens zwei Teilen (20, 22) aus Verbundmaterial nach einem der vorhergehenden Ansprüche, **dadurch gekennzeichnet, dass** die Fasern des ersten und zweiten Teils (10, 12) mit einer Referenzrichtung einen Winkel in der Größenordnung von 0°, 45°, 90° oder 135° bilden und dass die Fasern jeder Verbindungslage (38) mit der Referenzrichtung einen Winkel in der Größenordnung von 22,5°, 67,5°, 112,5° oder 157,5° bilden.

5. Zusammenbauverfahren durch Verschweißen von mindestens zwei Teilen (20, 22) aus Verbundmaterial nach einem der Ansprüche 1 bis 4, **dadurch gekennzeichnet, dass** eine einzige Verbindungslage (38) zwischen der ersten und zweiten Kontaktfläche (20.1, 22.1) des ersten und zweiten Teils (20, 22) eingefügt wird.

6. Zusammenbauverfahren durch Verschweißen von mindestens zwei Teilen (20, 22) aus Verbundmaterial nach einem der Ansprüche 1 bis 4, **dadurch gekennzeichnet, dass** eine erste Verbindungslage (38) zwischen der ersten und zweiten Kontaktfläche (20.1, 22.1) des ersten und zweiten Teils (20, 22) eingefügt wird und dass eine zweite Verbindungslage (38') und/oder eine dritte Verbindungslage (38") im Bereich der ersten Kontaktfläche (20.1) des ersten Teils (20) und/oder der zweiten Kontaktfläche (22.1) des zweiten Teils (22) positioniert wird/werden.

7. Zusammenbauverfahren durch Verschweißen von mindestens zwei Teilen (20, 22) aus Verbundmaterial nach einem der Ansprüche 1 bis 4, **dadurch gekennzeichnet, dass** eine Verbindungslage (38', 38") im Bereich der ersten Kontaktfläche (20.1) des ersten Teils (20) und/oder im Bereich der zweiten Kontaktfläche (22.1) des zweiten Teils (22) positioniert wird.

8. Zusammenbauverfahren durch Verschweißen von mindestens zwei Teilen (20, 22) aus Verbundmaterial nach einem der vorhergehenden Ansprüche, **dadurch gekennzeichnet, dass** mindestens eine Verbindungslage (38, 38', 38") direkt vor dem Schritt des Erzeugens des induzierten elektrischen Stroms positioniert wird.

9. Zusammenbauverfahren durch Verschweißen von mindestens zwei Teilen (20, 22) aus Verbundmaterial nach einem der vorhergehenden Ansprüche, **dadurch gekennzeichnet, dass** mindestens eine Verbindungslage (38', 38"), die im Bereich einer Kontaktfläche (20.1 oder 22.2) positioniert wird, vor einem Schritt des Verfestigens des Teils (20, 22) in das Teil (20, 22) integriert wird.

## Claims

1. Method for assembling at least two parts (20, 22) made of composite material by welding, the assembly comprising a first part (20) comprising at least one first contact surface (20.1), a second part (22) comprising at least one second contact surface (22.1) and at least one interface (34) where the first and second contact surfaces (20.1, 22.1) are linked, each part (20, 22) made of composite material comprising several plies of superposed fibres embedded in a matrix, the method comprising a step of generation of an induced electrical current and a step of positioning of at least one conductive fibre joining ply (38) inserted between the first contact surface (20.1) of the first part (20) and the second contact surface (22.1) of the second part (22) and/or positioned on at least one contact surface out of the first and second contact surfaces (20.1, 22.1), each joining ply (38) having unidirectional fibres, oriented in a different direction from the directions of the fibres of at least the fibre plies of the first and second parts (20, 22) close to the first and second contact surfaces (20.1, 22.1), **characterized in that** the induced electrical current is generated in a direction approximately parallel to the direction of the fibres of each joining ply (38).

2. Method for assembling at least two parts (20, 22) made of composite material by welding according to Claim 1, **characterized in that** the fibres of each joining ply (38) are oriented in a different direction from all of the directions of the fibres of the fibre plies of the first and second parts (20, 22).

3. Method for assembling at least two parts (20, 22) made of composite material by welding according to either of the preceding claims, **characterized in that** the fibres of at least one of the joining plies (38) are impregnated with a resin.

4. Method for assembling at least two parts (20, 22) made of composite material by welding according to one of the preceding claims, **characterized in that** the fibres of the first and second parts (10, 12) form, with a reference direction, an angle of the order of 0°, 45°, 90° or 135° and **in that** the fibres of each joining ply (38) form an angle, with the reference direction, of the order of 22.5°, 67.5°, 112.5° or 157.5°.

5. Method for assembling at least two parts (20, 22) made of composite material by welding according to one of Claims 1 to 4, **characterized in that** a single joining ply (38) is inserted between the first and second contact surfaces (20.1, 22.1) of the first and second parts (20, 22).

6. Method for assembling at least two parts (20, 22) made of composite material by welding according to one of Claims 1 to 4, **characterized in that** a first joining ply (38) is inserted between the first and second contact surfaces (20.1, 22.1) of the first and second parts (20, 22) and **in that** a second joining ply (38') and/or a third joining ply (38") is/are positioned on the first contact surface (20.1) of the first part (20) and/or the second contact surface (22.1) of the second part (22).

7. Method for assembling at least two parts (20, 22) made of composite material by welding according to one of Claims 1 to 4, **characterized in that** a joining ply (38', 38") is positioned on the first contact surface (20.1) of the first part (20) and/or on the second contact surface (22.1) of the second part (22).

8. Method for assembling at least two parts (20, 22) made of composite material by welding according to one of the preceding claims, **characterized in that** at least one joining ply (38, 38', 38") is positioned just before the step of generation of the induced electrical current.

9. Method for assembling at least two parts (20, 22) made of composite material by welding according to one of the preceding claims, **characterized in that** at least one joining ply (38', 38") positioned on a contact surface (20.1 or 22.2) is incorporated in the part (20, 22) before a step of consolidation of said part (20, 22).
